Europäisches Patentamt

(19) European Patent Office

Office européen des brevets

(11) Veröffentlichungsnummer: **0 341 389 B1**

(12) **EUROPÄISCHE PATENTSCHRIFT**

(45) Veröffentlichungstag der Patentschrift :
12.06.91 Patentblatt 91/24

(51) Int. Cl.⁵ : **B60S 3/04**

(21) Anmeldenummer : 89103997.6

(22) Anmeldetag : 07.03.89

(54) Verfahren und Vorrichtung zum Reinigen der Scheiben von Automobil-Neukarossen.

(30) Priorität : 11.05.88 DE 3816196

(43) Veröffentlichungstag der Anmeldung :
15.11.89 Patentblatt 89/46

(45) Bekanntmachung des Hinweises auf die
Patenterteilung :
12.06.91 Patentblatt 91/24

(84) Benannte Vertragsstaaten :
DE

(56) Entgegenhaltungen :
CH-A- 441 012
DE-A- 2 461 522
US-A- 2 720 868
US-A- 3 196 472
US-A- 4 312 090

(56) Entgegenhaltungen :
PATENT ABSTRACTS OF JAPAN vol. 9, no. 57
(M-363)(1780) 13 März 1985, & JP-A-59 192654
(TOUKIYOU TATSUNO K.K) 01 November
1984,

(73) Patentinhaber : **Behr Industrieanlagen GmbH
& Co.
Rosenstrasse 39
W-7120 Bietigheim-Bissingen (DE)**

(72) Erfinder : **Esslinger, Stefan
Tulpenweg 1
W-7121 Pleidelsheim (DE)**
Erfinder : **Luderer, Manfred
Schillerstrasse 30
W-7057 Leutenbach 2 (DE)**

(74) Vertreter : **Münzhuber, Robert, Dipl.-Phys. et al
Patentanwalt Rumfordstrasse 10
W-8000 München 5 (DE)**

**Beschreibung**

Die Erfindung betrifft ein Verfahren zum automatisierbaren Reinigen der Scheiben von auf einem Fließband beweglichen Automobil-Neukarossen, die für den temporären Transportschutz elektrostatisch mit einem Außenkonservierungsmittel, insbesondere einem wäßrigen Konservierungswachs, beschichtet worden sind. Ferner betrifft die Erfindung eine Vorrichtung zur Durchführung eines solchen Verfahrens.

Automobilkarossen werden vom Hersteller mit einer äußeren Konservierungsschicht versehen, die dazu dient, die Karosse auf ihrem Transport vom Hersteller zum Händler zu schützen. Als Konservierungsmittel dient dabei Wachs, das in verflüssigtem Zustand mittels einer elektrostatischen Zerstäubervorrichtung, meist einem Hochrotationszerstäuber, auf die Karosse aufgebracht und vom Händler mittels Heißdampf wieder entfernt wird. Ein Problem besteht nun darin, daß beim elektrostatischen Aufbringen des Konservierungsmittels nicht nur die zu schützenden Blechteile, sondern auch die Scheiben, also die Front-Seiten-Heckscheiben, beschichtet werden, so daß die Scheiben nach diesem Vorgang undurchsichtig sind. Für die Überführung der fertiggestellten Fahrzeuge vom Fließband zum Abstellplatz oder zum Verladebahnhof muß jedoch für die Fahrer die erforderlich Sicht gewährleistet werden. Aus diesem Grund müssen die Fahrzeugscheiben nach dem Konservierungsvorgang gereinigt werden, was im allgemeinen manuell erfolgt, in manchen Fällen auch mechanisch mittels Bürsten- oder Gummiwalzen. Aus Gründen des Emissionsschutzes ist man nun in der letzten Zeit immer mehr von der Verwendung organischer Lösungsmittel als Wachslöser abgegangen und auf die Verwendung sogenannter wäßriger Wachslösungen übergegangen. Dabei hat sich jedoch gezeigt, daß die sich dabei auf den Scheiben bildende Wachsschicht sehr fest am Glas haftet und beim Wegwischen zum Verschmieren neigt, es somit beträchtliche Schwierigkeiten bereitet, die Wachsschicht wieder von den Glasscheiben zu entfernen, sei es manuell oder mittels der erwähnten Bürsten- oder Gummiwalzen.

Aus der CH-A-441 012 ist eine Reinigungsvorrichtung zum Entfernen einer Flüssigkeit von einer zu reinigenden Fläche bekannt, die eine Griffkonstruktion als Träger für ein hohles Wischorgan aufweist, das in Berührung mit der zu trocknenden Fläche gebracht werden kann, wobei eine Abdichtung zwischen dem Wischorgan und der Fläche bewirkt wird, sowie Mittel aufweist, um in dem Hohlraum des Wischorgans zwecks Entfernung von Flüssigkeit einen Unterdruck zu erzeugen, wobei diese Mittel mit Hilfe von Druckluft betätigt werden können. Mit dem Problem der Entfernung von Feststoffen, nämlich Konservierungswachs, von Glasscheiben, beschäftigt sich diese Druckschrift jedoch nicht.

Aufgabe der vorliegenden Erfindung ist es deshalb, ein Verfahren und eine Vorrichtung zu schaffen, mit deren Hilfe es gelingt, auf wirtschaftliche, automatisierbare und voll in den Fertigungsablauf integrierbare Weise die Karosseriescheiben von der Außenkonservierungsschicht soweit zu befreien, daß die Fahrzeuge gefahrlos rangiert werden können. Die verfahrensgemäße Lösung dieser Aufgabe ergibt sich aus den kennzeichnenden Merkmalen des Anspruches 1, die vorrichtungsgemäße Lösung aus dem kennzeichnenden Merkmal des Patentanspruches 4.

Bei der Erfindung wird also die auf den Scheiben haftende Wachsschicht durch ein Lösefluid angelöst und das gelöste, also flüssige Wachs sofort zusammen mit dem Lösefluid abgesaugt, und zwar auf einem begrenzten Scheibenbereich. Damit wird verhindert, daß das entstehende Gemisch aus verflüssigtem Wachs und Lösefluid sich auf der Karosse ausbreitet und damit die Wachsschicht auch an solchen Stellen anlösen kann, die geschützt werden sollen. Dabei läßt sich dieses Verfahren sehr gut in den Bewegungsvorgang der auf dem Fließband befindlichen Karossen integrieren, wie nachfolgend anhand von Ausführungsbeispielen für Vorrichtungen zur Durchführung des Verfahrens noch im einzelnen erläutert werden wird.

Auf der Zeichnung sind Ausführungsformen der erfindungsgemäßen Vorrichtung beispielsweise dargestellt. Es zeigen :

Fig. 1 in perspektivischer Darstellung die wesentlichen Teile einer Ausführungsform der Vorrichtung,

Fig. 2A, B und C Skizzen zur Erläuterung des Reinigungsvorgangs mit einer Vorrichtung gemäß Fig. 1, und

Fig. 3 einen Schnitt durch eine weitere Ausführungsform der Vorrichtung.

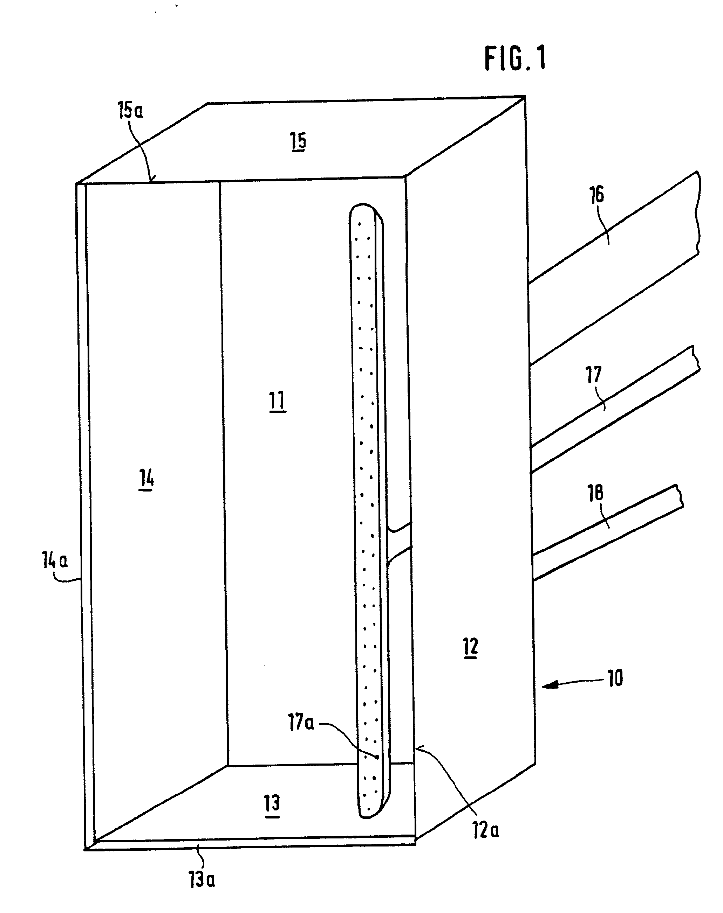

Gemäß Fig. 1 weist die Vorrichtung ein kastenförmiges, genauer gesagt quaderförmiges Gehäuse 10 auf, das aus einem Boden 11 und vier Seitenwänden 12, 13, 14 und 15 besteht, an seiner Frontseite jedoch offen ist. Der Boden 11 des Gehäuses 10 ist am freien Ende eines nur teilweise dargestellten Roboterarms 16 befestigt. Eine Zuführleitung 17 durchsetzt den Gehäuseboden 11 und endet im Gehäuseinnenraum als langgestreckte Sprühdüse 17a, die parallel zu den beiden vertikalen Gehäusewänden 12, 14 verläuft und sich im wesentlichen über die gesamte Höhe des Gehäuses 10 erstreckt. Die freien Randkanten 12a und 15a der Gehäuseseitenwände 12 und 15 sind als Dichtrippen ausgebildet und können beispielsweise aus Gummi bestehen. Die beiden Seitenwände 13 und 14 sind als Doppelwände ausgebildet, derart, daß ihre freien Randkanten 13a und 14a Schlitze sind, die in Verbindung mit einer am Gehäuseboden 11 angeschlossenen Absaugleitung 18 Absaugschlitze darstellen. Die Schlitzkanten der Absaugschlitze 13a und 14a sind dabei ebenfalls Dichtlippen.

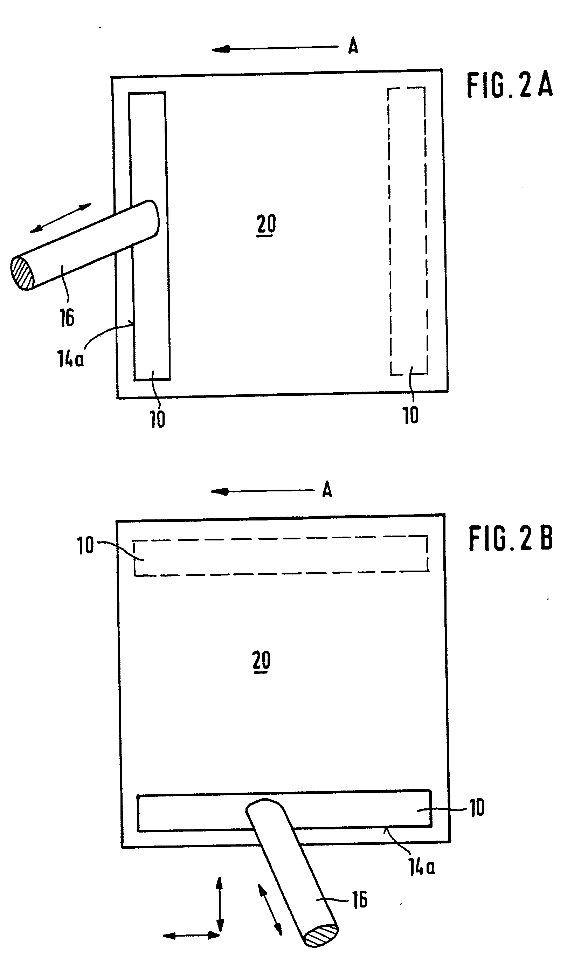

Die Funktions- und Arbeitsweise der Vorrichtung von Fig. 1 wird nun anhand der Skizze 2A erläutert. In Fig. 2A ist mit 20 eine Seitenscheibe einer Automobilkarosserie bezeichnet, die sich auf einem Fließband bewegt, und zwar in Richtung des Pfeils A. Diese Scheibe 20 soll nun mit der Vorrichtung von Fig. 1 gereinigt werden, wobei der Übersichtlichkeit halber in Fig. 2A nur der Roboterarm 16 und der Gehäuseboden 11 dargestellt und bezeichnet sind. Sobald die voreilende Vertikalkante 20a der Scheibe 20 in Gegenüberstellung zur Reinigungsvorrichtung gelangt, fährt der senkrecht zur Bewegungsrichtung A verfahrbare Roboterarm 16 das Gehäuse 10 in Richtung auf die Scheibe 20 zu, bis die Rankanten 12a, 13a, 14a und 15a des Gehäuses 10 zur Anlage an die Oberfläche der Scheibe 20 kommen. Der Roboterarm 16 hält dann das Gehäuse 10 so lange in Anlage an der Scheibe 20, bis das Gehäuse 10 sich infolge der Karossenbewegung (Bewegungsrichtung A) in der in gestrichelten Linien dargestellten Position benachbart der nacheilenden Kante 20b der Scheibe 20 befindet. Unmittelbar vor Erreichen dieser Kante 20b fährt der Roboterarm 16 wieder zurück und hebt dabei das Gehäuse 10 von der Scheibe 20 ab. Während des Hinweggleitens der Reinigungsvorrichtung über die Scheibe 20 von der in ausgezogenen Linien dargestellten Position in die in gestrichelten Linien dargestellte Position sprüht die Düse 17a Lösungsflüssigkeit auf die Wachsschicht und verflüssigt das Wachs. Der verflüssigte Bereich wird dann von der als Absaugschlitz ausgebildeten Gehäuserandkante 14a überfahren, wobei das verflüssigte Wachs zusammen mit Löseflüssigkeit durch die Schlitzöffnung des Schlitzes 14a abgesaugt und durch die Absaugleitung 18 abgefördert wird. Die entsprechende Absaugung durch den unteren Absaugschlitz 13a stellt sicher, daß kein Wachs-Lösungsmittel-Gemisch nach unten abläuft, bevor es vom Schlitz 14a erfaßt wird. Auf diese Weise erfolgt eine Entfernung der Wachsschicht auf im wesentlichen dem gesamten Bereich der Scheibe 20, ohne daß die Gefahr besteht, daß eine ungewollte Anlösung der Wachsschutzschicht um die Scheibe 20 herum auftritt.

Die Vorrichtung von Fig. 1 kann für den Reinigungsvorgang gemäß Fig. 2A Abwandlungen erfahren. So kann beispielsweise die untere Randkante 13a als einfache Dichtlippe ausgebildet sein, womit dann lediglich die Randkante 14a zur Absaugung dient. Andererseits ist es aber auch möglich, auf die obere Randkante 15a als Absaugschlitz auszubilden, wobei dann der besprühte Scheibenbereich dreiseitig von Absaugschlitzen begrenzt ist. Um zu verhindern, daß die auf der Scheibenfläche voreilende Randkante 12a zu sehr von dem auf der Scheibe befindlichen Wachs verschmutzt wird, ist es ferner möglich, diese Randkante 12a geringfügig zurückzusetzen, derart, daß zwischen ihr und der Scheiben- bzw. Wachsschichtoberfläche ein minimaler Spalt bleibt. Auch die Ausbildung der Sprühdüse 17a kann den jeweiligen Erfodernissen angepaßt werden ; beispielsweise kann die Sprühdüse in mehrere Sprühköpfe aufgeteilt werden. Schließlich sind für die Kanalführung zwischen den Schlitzrändern und der Absaugleitung 18 verschiedene Gestaltungsmöglichkeiten gegeben, wobei jedoch die erwähnte Doppelwand-Konstruktion aufgrund ihrer Einfachheit besonders zweckmäßig ist. Als Lösefluid kann Heißwasser dienen oder auch Wasser, das mit einem Lösemittel versetzt ist ; die Wahl ist jeweils in Abhängigkeit von der Art des Konservierungsmittels zu treffen.

Anstelle einer Löseflüssigkeit kann auch ein Lösegas verwendet werden, insbesondere Heißluft. Dabei ist dann die Sprühdüse als Luftdusche auszubilden ; es können aber auch mehrere Einzeldüsen Verwendung finden.

Fig. 2B zeigt einen Reinigungsvorgang, bei dem die Scheibe von unten nach oben gereinigt wird. Dabei ist die Vorrichtung von Fig. 1 um 90° gedreht, so daß beim Aufsetzen des Gehäuses 10 auf die Scheibe 20 der Absaugschlitz 14a sich nahe benachbart der Unterkante der Scheibe 20 befindet. Ferner ist es dabei zweckmäßig, wenn beide Randkanten 13a und 15a ebenfalls als Absaugschlitze ausgebildet sind. Um das auf die Scheibe 20 aufgesetzte Gehäuse 10 in die in gestrichelten Linien dargestellte obere Position zu bringen, ist es erforderlich, daß der Roboterarm 16 zusätzlich zu seiner Bewegung senkrecht zur Richtung A der Karossenbewegung eine kombinierte Bewegung nach oben und in Richtung A durchführt, also eine zur Richtung A schräg verlaufende Bewegung, wobei der Schrägwinkel eine Funktion der Bewegungsgeschwindigkeit der Karossen ist. Die konstruktiv einfachste Lösung dabei ist, wenn der Roboterarm 16 lediglich Vorwärts-Rückwärts- sowie Auf-Ab-Bewegungen durchführt und der ganze Roboter bzw. die gesamte Vorrichtung mit der Karosse mitfährt. Selbstverständlich ist es auch möglich, den Bewegungsvorgang umzukehren, das heißt, den Reinigungsvorgang von oben nach unten durchzuführen, in welchem Fall dann die Vorrichtung von Fig. 1 um 90° im Uhrzeigersinn zu drehen ist.

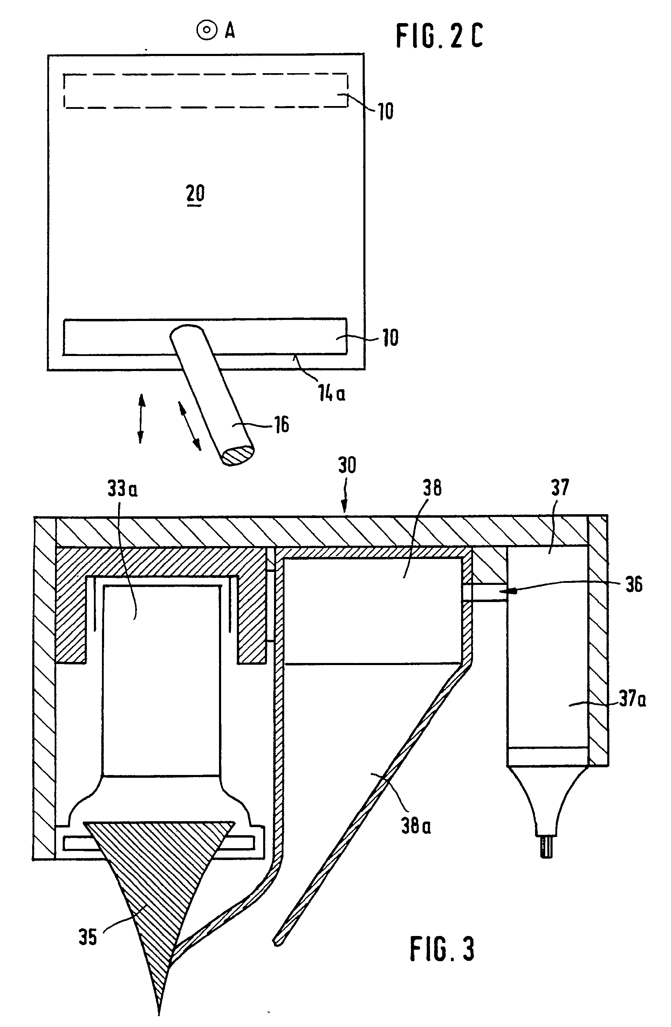

Das Reinigen der Front- und Heckscheiben kann so erfolgen, wie dies in Fig. 2C angedeutet ist. Dabei entspricht dieser Reinigungsvorgangs im wesentlichen demjenigen nach Fig. 2B, wobei jedoch das Gehäuse 10 lediglich von oben nach unten bzw. von unten nach oben bewegt und mit der Karosserie mitbewegt werden muß. Bei großen Front- und Heckscheiben kann es zweckmäßig sein, anstelle eines einzigen großen Gehäuses 10 mehrere kleinere Gehäuse in Nebeneinanderanordnung zu verwenden. Schließlich ist auch eine Reinigung der Front- und Heckscheiben gemäß dem Bewegungsprinzip von Fig. 2A möglich, wobei jedoch der Roboterarm 16 außer der Hin- und Herbewegung auch eine Mitbewegung mit der Karosse bewerkstelligen muß, bei gewölbten Scheiben sogar eine gekrümmte Bewegung.

Eine weitere Ausführungsform der erfindungsgemäßen Vorrichtung ist in Fig. 3 im Schnitt dargestellt. Dabei ist der Gehäusekasten im Ganzen mit 30, der innerhalb des Gehäusekastens 30 verlaufende Teil der Lösemittel-Zuführleitung mit 37 und der innerhalb des Gehäusekastens 30 verlaufende Teil der Absaugleitung mit 38 bezeichnet. Die Lösemittel-Zuführleitung 37 mündet in eine Abgabeöffnung 37a und die Absaugöffnung 38 weist eine Ansaugöffnung 38a auf. Mit 35 ist eine gesonderte Dichtlippe bezeichnet, die an einem im Gehäuse 30 verankerten Bolzen 35a befestigt ist und an der die nacheilende Randkante der Absaugöffnung 38a anliegt. Mit 36 ist eine Bypaß-Leitung bezeichnet, welche die Zuführleitung mit der Absaugleitung 38 verbindet. Die Ausführungsform nach Fig. 3, deren Funktionsweise im wesentlichen derjenigen der Vorrichtung von Fig. 1 entspricht, gewährleistet im besonderen Maße, daß die zu reinigende Scheibe vollständig von dem Konservierungsmittel und dem Lösemittel befreit wird. Die Bypaßleitung 36 dient dazu, das Gemisch aus Konservierungsmittel und Lösefluid zu verdünnen, um so Verstopfungen der Absaugleitung auszuschließen.

Selbstverständlich ist die Erfindung nicht auf die erläuterten Ausführungsformen beschränkt. Wesentlich ist lediglich, daß gemäß dem beanspruchten Verfahren die Konservierungsmittelschicht auf der Scheibenoberfläche mittels eines Lösefluids verflüssigt und dann sofort abgesaugt wird. Dabei ist dieses Reinigungsverfahren offensichtlich leicht in den fließbandmäßigen Herstellungsvorgang der Karossen zu intergrieren, wobei die Scheibenreinigungsvorrichtung als letzte Station des Fließbands angeordnet wird.

## Ansprüche

1. Verfahren zum automatisierbaren Reinigen der Scheiben von Automobil-Neukarossen, die für den temporären Transportschutz auf einem Fließband vorzugsweise elektrostatisch mit einem Außenkonservierungsmittel, insbesondere einem wäßrigen Konservierungswachs, beschichtet worden sind, dadurch gekennzeichnet, daß auf einem definierten Scheibenbereich ein die Konservierungsmittelschicht lösendes Fluid aufgebracht und dieses unmittelbar nach Verflüssigung der Konservierungsmittelschicht zusammen mit dem gelösten Konservierungsmittel wieder abgesaugt wird, wobei dieser Vorgang kontinuierlich über im wesentlichen die gesamte Scheibenfläche fortgeführt wird.

2. Verfahren nach Anspruch 1, dadurch gekennzeichnet, daß als Lösefluid erhitztes Gas, vorzugsweise Heißluft, verwendet wird.

3. Verfahren nach Anspruch 1, dadurch gekennzeichnet, daß als Lösefluid Wasser verwendet wird, vorzugsweise Heißwasser und/oder mit einem chemischen Lösungsmittel versetztes Wasser.

4. Vorrichtung zur Durchführung des Verfahrens nach einem der Ansprüche 1 bis 3, gekennzeichnet durch einen zumindest in einer zur Karossenbewegung senkrechten Richtung steuerbar beweglichen Roboterarm (16), ein in Form eines offenen Kastens gestaltetes Gehäuse (10), dessen Boden (11) am freien Ende des Roboterarms (16) befestigt ist und dessen freie Randkanten (12a, 13a, 14a, 15a) teilweise als Dichtlippen ausgebildet sind, eine Zuführleitung (17) für Lösefluid, deren Abgabeöffnung (17a) im Inneren des Kastengehäuses (10) mündet und auf die Gehäuseöffnung gerichtet ist, und eine Absaugleitung (18), deren Absaugmündung vom Gehäuseinneren abgeht.

5. Vorrichtung nach Anspruch 4, dadurch gekennzeichnet, daß die Abgabeöffnung (17a) der Lösefluidzuführung (17) als Luftdusche oder Sprühdüse ausgebildet ist.

6. Vorrichtung nach Anspruch 4 oder 5, dadurch gekennzeichnet, daß die Absaugöffnung der Absaugleitung (18) eine Schlitzdüse ist, die zugleich die Randkante (13a, 14a) zumindest eines der freien Seitenränder des Kastengehäuses (10) darstellt.

7. Vorrichtung nach Anspruch 6 zum Reinigen einer Seitenscheibe, dadurch gekennzeichnet, daß der Roboterarm (16) eine Hin- und Herbewegung senkrecht zur Bewegungsrichtung (A) der Karossen durchführt, daß Kastengehäuse (10) und Sprühdüse (17a) eine vertikale Erstreckung im wesentlichen gleich der Scheibenhöhe aufweist und daß zumindest die nacheilende vertikale Randkante (14a) des Gehäuses (10) als Absaugschlitz ausgebildet ist.

8. Vorrichtung nach Anspruch 6 zum Reinigen einer Seitenscheibe, dadurch gekennzeichnet, daß der Roboterarm frei zueinander und zur Bewegungsrichtung (A) der Karosse senkrechte Bewegungen sowie eine Mitbewegung der Karosse durchführt, daß Gehäuse (10) und Sprühdüse (17a) eine horizontale Erstreckung im wesentlichen gleich der Scheibenbreite aufweisen und daß zumindest die nacheilende horizontale Randkante des Gehäuses (10) als Absaugschlitz ausgebildet ist.

9. Vorrichtung nach Anspruch 6 zum Reinigen von Front- und Heckscheiben, dadurch gekennzeichnet, daß der Roboterarm eine Auf- und Abbewegung senkrecht zur Bewegungsrichtung (A) der Karosse sowie eine Mitbewegung mit der Karosse durchführt, daß Kastengehäuse (10) und Sprühdüse (17a) eine horizontale Erstreckung im wesentlichen gleich der Breite der Front- bzw. Heckscheibe aufweisen und daß zumindest die nacheilende horizontale Randkante des Gehäuses (10) als Absaugschlitz ausgebildet ist.

10. Vorrichtung nach einem der Ansprüche 7 bis 9, dadurch gekennzeichnet, daß die voreilende Randkante des Kastengehäuses (10) gegenüber den drei anderen Gehäuserandkanten geringfügig zurückgesetzt ist.

11. Vorrichtung nach einem der Ansprüche 4 bis 10, gekennzeichnet durch eine Bypaßleitung (36), die unmittelbar vor der Abgabeöffnung (37a) von der Zuführleitung (37) für Lösefluid abgeht und unmittelbar nach der Absaugmündung (38a) in die Absaugleitung (38) mündet.

## Claims

1. A method, suited for automation, for cleaning windows of new automobile bodies coated preferably electrostatically with an aqueous conservation agent, preferably an aqueous conservation wax, for temporary protection during transportation, characterized by applying on a defined window pane area a fluid dissolving the conservation film and, immediately after liquefaction of said film of conservation agent, sucking said fluid off again, said method being carried out continously over substantially the entire surface of the pane.

2. Method according to claim 1, characterized in that the dissoving fluid is heated gas, preferably hot air.

3. Method according to claim 1, characterized in that the dissolving fluid is water, preferably hot water and/or water mixed with a chemical solvent.

4. An apparatus for carrying out the method according to one of claims 1 to 3, characterized by a robot arm (16) controllably movable in at least a direction normal to the movement of the body, a housing (10) in the form of an open box whose bottom (11) is mounted to the free end of the robot arm (16) and whose free marginal edges (12a, 13a, 14a, 15a) are designed partially as sealing lips, a feed conduit (17) for the solvent fluid whose dispensing opening (17a) ends in the interior of the box housing (10) and is directed towards the housing opening, and a suction conduit (18) whose suction opening extends from the housing interior.

5. Apparatus according to claim 4, characterized in that the dispensing opening (17a) of the dissolving fluid feed conduit (17) is designed as air blower or as spray nozzle.

6. Apparatus according to claim 4 or 5, characterized in that the suction opening of the suction conduit (18) is a slot nozzle which at the same time forms the marginal edge (13a, 14a) of at least one of the free lateral edges of the box housing (10).

7. Apparatus according to claim 6 for cleaning a side window, characterized in that the robot arm (16) performs reciprocating motions normal to the direction of movement (A) of the bodies, that box housing (10) and spray nozzle (17a) have a vertical extension substantially equal to the window pane height, and that at least the trailing vertical marginal edge (14a) of the housing (10) is designed as suction slot.

8. Apparatus according to claim 6 for cleaning a side window pane, characterized in that the robot arms perform vertical motions freely toward each other and to the direction (A) of movement of the body, while moving along with the body, that the housing (10) and spray nozzle (17a) have a horizontal extension substantially equal to the width of the window pane, and that at least the trailing horizontal marginal edge of the housing (10) is designed as suction slot.

9. Apparatus according to claim 6 for cleaning front and rear window panes, characterized in that the robot arm performs up and down motions normal to the direction of advance (A) of the body, that the box housing (10) and spray nozzle (17a) have a horizontal extension substantially equal to the width of the front and rear window panes, and that at lease the trailing horizontal marginal edge of the housing (10) is designed as suction slot.

10. Apparatus according to one of claims 7 to 9, characterized in that the leading marginal edge of the box housing (10) is slightly recessed relative to the other three housing edges.

11. Apparatus according to one of claims 4 to 10, characterized by a bypass conduit (36) branching off the solvent fluid feed conduit (38) directly upstream of the dispensing opening (37a) and opening into the suction conduit (38) directly down-stream of the suction opening (38a).

## Revendications

1. Procédé de nettoyage des vitres de carrosseries neuves d'automobiles, ledit nettoyage étant apte à être automatisé, lesdits vitres ayant été recouverts, de préférence par voie électrostatique, d'un agent de conservation extérieure, plus particulièrement d'une cire de conservation acqueuse, ledit agent destiné à assurer une protection temporaire durant le transport sur un tapis roulant, procédé caractérisé en ce que l'on applique un fluide susceptible de dissoudre la couche d'agent de conservation à une zone définie du vitre, et en ce que, immédiatement après la fluidification de la couche d'agent de conservation, ledit fluide est enlevé, par aspiration, ensemble avec l'agent de conservation dissout, cette action étant effectuée en continu sur la surface sensiblement entière du vitre.

2. Procédé selon la revendication 1, caractérisé en ce que l'on emploie, comme fluide solvant, du gaz chauffé, de préférence de l'air chauffé.

3. Procédé selon la revendication 1, caractérisé en ce que l'on emploie, comme fluide solvant, de l'eau, de préférence de l'eau chaude, et/ou de l'eau mélangée avec un solvant chimique.

4. Installation destinée à la mise en oeuvre du procédé selon l'une quelconque des revendications 1 à 3, caractérisée par un bras de robot (16), pouvant effectuer des mouvements commandés dans une direction perpendiculaire au mouvement de la carrosserie, au moins ; un boîtier (10), réalisé sous la forme d'un caisson ouvert et dont le fond (11) est rattaché au bout libre du bras de robot (16) et dont les bords marginaux libres (12a, 13a, 14a, 15a) sont, en partie, réalisés sous la forme de lèvres d'étanchéité ; une conduite d'amenée (17) pour le fluide solvant, dont l'orifice de décharge (17a) débouche à l'intérieur du boîtier (10) sous la forme de caisson et est dirigé vers le côté ouvert du boîtier, et une conduite d'aspiration (18) dont la bouche d'aspiration départ de l'intérieur du boîtier.

5. Installation selon la revendication 4, caractérisée en ce que l'orifice de décharge (17a) de la conduite d'amenée (17) du fluide solvant est réalisé sous la forme d'une douche d'air ou d'un pulvérisateur.

6. Installation selon la revendication 4 ou 5, caractérisée en ce que la bouche d'aspiration de la conduite d'aspiration (18) est une tuyère à fente qui constitue, en même temps, le bord marginal (13a, 14a) de l'un, au moins, des bords latéraux libres du boîtier (10) sous la forme de caisson.

7. Installation selon la revendication 6, destinée à nettoyer un vitre latéral, caractérisée en ce que le bras de robot (16) exécute un mouvement de va-et-vient perpendiculairement à la direction de mouvement (A) de la carrosserie ; en ce que le boîtier (10) sous la forme de caisson et le pulvérisateur (17a) ont une dimension verticale sensiblement égale à la hauteur du vitre ; et en ce que le bord marginal vertical en arrière (14a), au moins, du boîtier (10) est réalisé sous la forme d'une fente d'aspiration.

8. Installation selon la revendication 6, destinée à nettoyer un vitre latéral, caractérisée en ce que le bras de robot (16) exécute des mouvements à effectuer librement perpendiculairement les uns aux autres et à la direction de mouvement (A) de la carrosserie ainsi qu'un mouvement doubleur de celui de la carrosserie ; en ce que le boîtier (10) et le pulvérisateur (17a) ont un dimension horizontale sensiblement égale à la largeur du vitre ; et en ce que le bord marginal horizontal en arrière, au moins, du boîtier (10) est réalisée sous la forme d'une fente d'aspiration.

9. Installation selon la revendication 6, destinée à nettoyer des pare-brise et des lunettes arrière, caractérisée en ce que le bras du robot exécute un mouvement de montée et de descente perpendiculaire à la direction de mouvement (A) de la carrosserie ainsi qu'un mouvement doubleur de celui de la carrosserie ; en ce que le boîtier (10) sous la forme de caisson et le pulvérisateur (17a) ont une dimension horizontale sensiblement égale à la largeur, respectivement du pare-brise et la lunette arrière ; et en ce que le bord marginal horizontal en arrière, au moins, du boîtier (10) est réalisé sous la forme d'une fente d'aspiration.

10. Installation selon l'une quelconque des revendications 7 à 9, caractérisée en ce que le bord marginal en avant du boîtier (10) sous la forme de caisson fait légèrement retrait par rapport aux trois autres bords marginaux du boîtier.

11. Installation selon l'une quelconque des revendications 4 à 10, caractérisée par une conduite à bypass (36) qui est branchée sur la conduite d'amenée (37) du fluide solvant immédiatement en amont de l'orifice de décharge (37a) et qui débouche dans la conduite d'aspiration (38) immédiatement en aval de la bouche d'aspiration (38a).

FIG. 2 A

A

20

16

14a

10          10

FIG. 2 B

A

10

20

10

14a

16

⊙ A

# FIG. 2 C

20

10

10

14a

16

33a

30

38

37

36

38a

37a

35

# FIG. 3